# EUROPEAN PATENT SPECIFICATION

(11) **EP 1 760 909 B1**
(45) Date of publication and mention of the grant of the patent: **06.04.2011**
(21) Application number: 06119235.7
(22) Date of filing: 21.08.2006
(51) Int. Cl.: H04B 7/26, F28D 1/047, F28F 9/013, F28F 1/36

(54) **Turn fin condenser**
Kondensator mit Serpentinenrippenrohren
Condensateur avec des tubes de type à serpentine à ailettes

(30) Priority: 05.09.2005 KR 20050025568
(43) Date of publication of application: 07.03.2007
(73) Proprietor: Korea Bundy Co., Ltd., 451-865 Pyongtaek-city, Kyongki-do (KR)
(72) Inventor: Lee, Dong Ha, 451-865, Pyongtaek-city, Kyongki-do (KR); Jeong, Kwang Hun, 451-865, Pyongtaek-city, Kyongki-do (KR)
(74) Representative: Beck, Michael Rudolf

(56) References cited:
- DE-U1- 9 318 388
- DE-U1-202004 000 625
- DE-U1-202006 006 499
- GB-A- 1 073 141
- NL-A- 7 503 959

## Description

### BACKGROUND OF THE INVENTION

### Field of the Invention

The present invention relates to a condenser employing a turn fin tube, and more particularly, to a turn fin condenser having an improved structure as defined in the preamble of claim 1. Such a turn fin condencer is known for instance from GB-1073141.

### Background of the Related Art

Generally, a refrigerator, freezer, or air-conditioner uses a condenser for radiating thermal energy to the exterior from a high-temperature and high-pressure refrigerant discharged from a compressor. A turn fin condenser was proposed to widen a contact area between the condenser and the external air in order to more effectively radiate thermal energy from the refrigerant.

Specifically, a turn fin tube is formed by rotating a tube and spirally winding an appropriate width of wrinkled strip on an outer surface of the tube in a close contact manner. The wrinkled strip has a small gap at its part in contact with the outer surface of the tube and a large gap at its outermost part, thereby forming a spiral turn fin.

Meanwhile, since the condenser employing the turn fin tube should bend the tube after spirally winding the turn fin on the outer surface of the tube, it is difficult to effectively adjust a gap between tube windings when the turn fin tube is disposed in a serpentine shape.

As a result, while the condenser employing the turn fin tube has good heat exchange efficiency per unit length, since the turn fin tube occupies a large space, it is difficult to miniaturize an actual product.

In addition, the condenser employing the turn fin tube uses a fixing member for fixing the turn fin tube to a frame. The fixing member includes an inner bracket and an outer bracket having repeatedly formed arc parts corresponding to an inner diameter of the turn fin tube, disposed at inner and outer sides of the condenser, and fastened to the condenser using bolts.

However, fastening the fixing member using bolts is a time-consuming operation.

### SUMMARY OF THE INVENTION

Therefore, the present invention has been made in view of the above problems, and it is an object of the present invention to provide a turn fin condenser having improved heat exchange efficiency per unit volume.

According to an aspect of the present invention, a turn fin condenser comprises a turn fin tube formed of a wrinkled strip having a predetermined width and spirally wound around a tube through which fluid flows, characterized in that the turn fin tube is primarily bent into a serpentine shape to be horizontally arranged and fixed by a horizontal fixing member, and secondarily bent in the longitudinal direction of the primarily bent serpentine shape.

The horizontal fixing member may comprise a fixing device having a semi-cylindrical part of the same inner diameter as an outer surface of the turn fin tube and extension parts extending in parallel from both sides of the semi-cylindrical part. The fixing device may be closely fitted to the outer surface of the turn fin tube by a press device.

In addition, at least two horizontal fixing members may be installed in the longitudinal direction of the serpentine shape.

Further, the turn fin condenser may further comprise a vertical fixing member for arranging and fixing a vertical position of the horizontal fixing member vertically disposed in the secondarily bent state.

The horizontal fixing member may comprise a flange formed at its one side and having a fastening hole, and the vertical fixing member may comprise a fastener fastened to the fastening hole.

### BRIEF DESCRIPTION OF THE DRAWINGS

The above and other aspects and advantages of the present invention will become apparent and more readily appreciated from the following description of exemplary embodiments, taken in conjunction with the accompanying drawings of which:
FIG. 1 is a front view of a turn fin condenser in accordance with an exemplary embodiment of the present invention;
FIG. 2 is a plan view of a turn fin condenser in accordance with an exemplary embodiment of the present invention;
FIG. 3 is a partially cut-away side view of a turn fin condenser in accordance with an exemplary embodiment of the present invention;
FIG. 4 is a perspective view of a horizontal fixing member installed at a turn fin condenser in accordance with an exemplary embodiment of the present invention;
FIG. 5 is a set of cross-sectional views showing a process of pressing a horizontal fixing member installed at a turn fin condenser in accordance with an exemplary embodiment of the present invention using a press device; and
FIG. 6 is a set of views showing a process of manufacturing a turn fin condenser in accordance with an exemplary embodiment of the present invention.

### DETAILED DESCRIPTION OF EXEMPLARY EMBODIMENTS

Exemplary embodiments of the present invention will now be described in detail with reference to the accompanying drawings, throughout which like reference numerals refer to like elements.

Hereinafter, a turn fin condenser in accordance with an exemplary embodiment of the present invention will be described in detail with reference to the accompanying drawings.

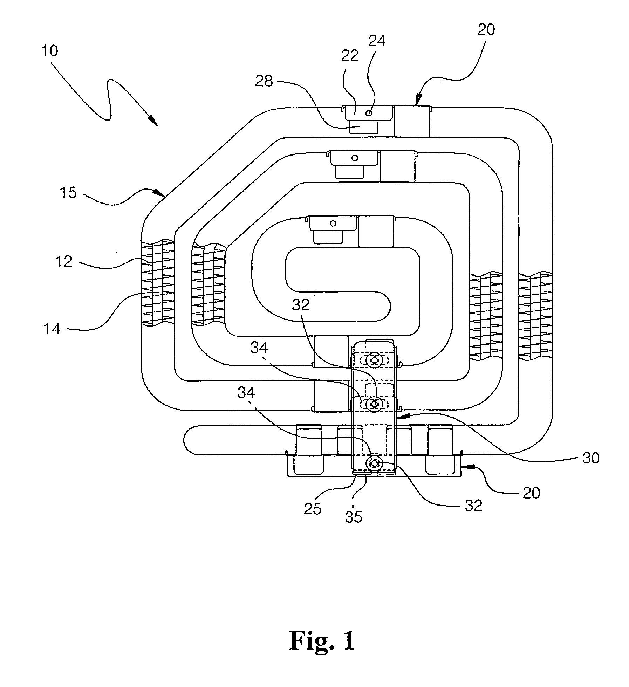

FIG. 1 is a front view of a turn fin condenser in accordance with an exemplary embodiment of the present invention.

As shown in FIG. 1, a condenser employing a turn fin tube in accordance with an exemplary embodiment of the present invention may include a turn fin tube 15, a horizontal fixing member 20, and a vertical fixing member 30.

The turn fin tube 15 includes a tube 14 through which fluid flows, and a turn fin 12 attached at an outer surface of the tube 14 for accelerating heat exchange between the fluid flowing through the tube 14 and the external air. The turn fin 12 is spirally wound around the tube 14 to widen a contact area between the tube 14 and the external air.

After the turn fin 12 is wound around the tube 14, the tube 14 and the turn fin 12 may be brazed to each other to increase heat exchange efficiency.

In addition, the turn fin tube 15 is primarily bent into a serpentine shape to be horizontally arranged and fixed by the horizontal fixing member 20, and secondarily bent in the longitudinal direction of the primarily bent serpentine shape. As described above, the secondarily bent turn fin condenser has a multi-stage structure in horizontal/vertical directions. As a result, it is possible to increase the density of the turn fin tube 15 per unit volume.

Here, the serpentine shape means that the tube 14 is alternately bent by 180° at predetermined intervals to form a multi-stage structure such that fluid flowing through the tube 14 alternately flows in opposite directions through the serpentine shaped tube.

Meanwhile, the secondarily bent turn fin tube 15 is arranged in a horizontal direction by the horizontal fixing member 20, and arranged and fixed in a vertical direction by the vertical fixing member 30.

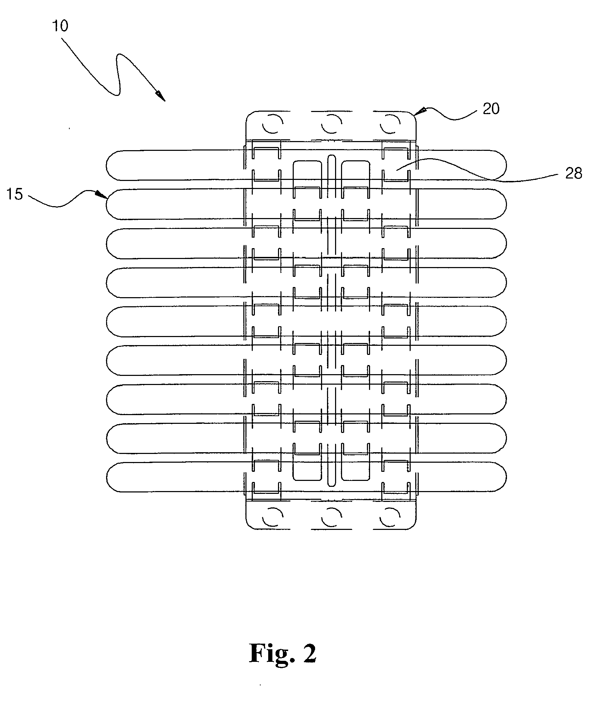

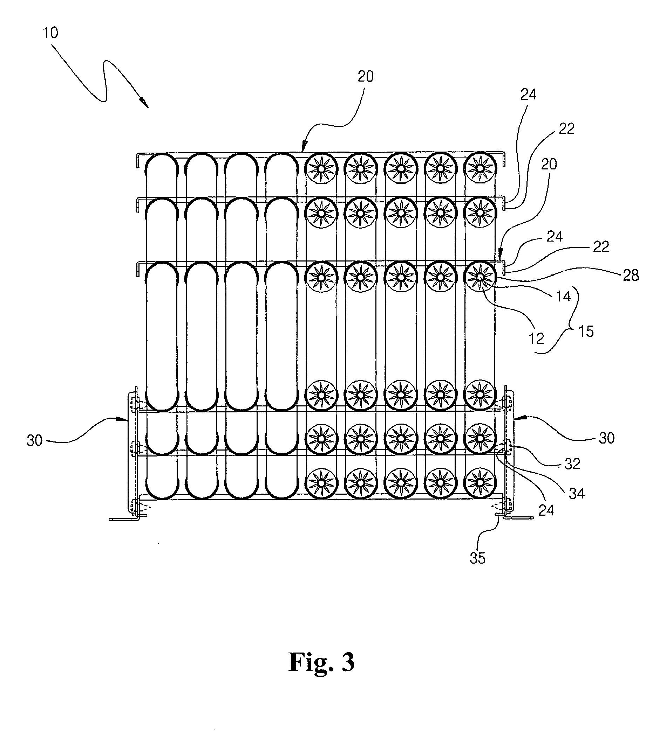

FIGS. 2 and 3 are a plan view and a partially cut-away side view of a turn fin condenser in accordance with an exemplary embodiment of the present invention.

As shown in FIGS. 2 and 3, in the turn fin condenser 10 in accordance with an exemplary embodiment of the present invention, the primarily bent turn fin tube 15 is pressed and fixed to the horizontal fixing member 20 at its upper and lower parts. In addition, after secondarily bending the turn fin tube 15, the vertical position of the horizontal fixing member 20 is arranged and fixed by the vertical fixing member 30.

Here, the horizontal fixing member 20 may be installed at vertical stages of the secondarily bent turn fin condenser 10.

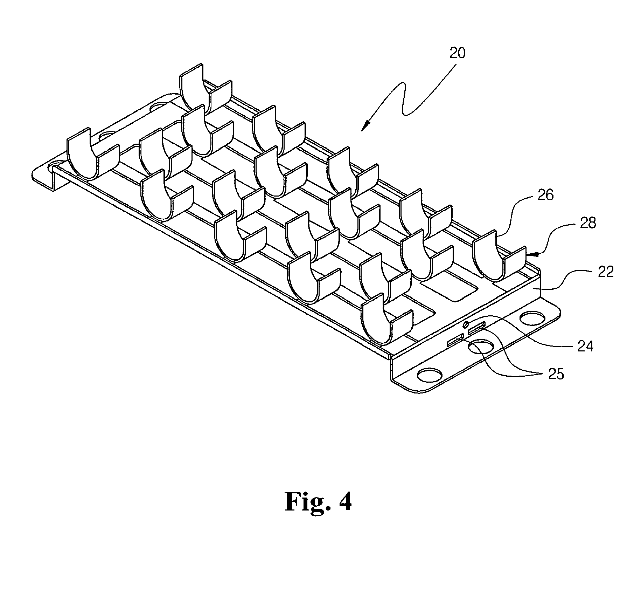

FIG. 4 is a perspective view of a horizontal fixing member installed at a turn fin condenser in accordance with an exemplary embodiment of the present invention.

Referring to FIG. 4, the horizontal fixing member 20 may include a fixing device 28, a flange 22, a first fastening hole 24, and a coupling hole 25.

The fixing device 28 includes a semi-cylindrical part to be in close contact with an outer surface of the turn fin tube 15, and extension parts 26 extending in parallel from both sides of the semi-cylindrical part, thereby forming a substantially U-shaped cross-section.

Meanwhile, the fixing device 28 is disposed on one surface of the horizontal fixing member 20 at predetermined intervals. In addition, at least two horizontal fixing members 20 may be installed in the longitudinal direction of the primarily bent serpentine turn fin tube 15.

When the horizontal fixing members 20 are disposed in four columns, the fixing devices of the adjacent outer and inner horizontal fixing members may be disposed in a zigzag shape.

Of course, when the horizontal fixing members 20 are disposed in two columns, the fixing devices of the adjacent horizontal fixing members may also be disposed in a zigzag shape.

Meanwhile, side flanges 22 of the horizontal fixing member 20 have first fastening holes 24, and the vertical fixing member 30 has second fastening holes 34 vertically disposed at predetermined intervals. Fasteners 32 pass through the first and second fastening holes 24 and 34 and are fastened to the fixing members 20 and 30 in a state in which the fastening holes 24 and 34 are aligned, thereby vertically aligning and fixing the vertical fixing member 20.

Meanwhile, the horizontal fixing member 20 may include the fixing device 28 provided with a semi-cylindrical part having an inner diameter equal to the outer diameter of the turn fin tube 15 and extension parts 26 extending in parallel from both sides of the semi-cylindrical part.

The fixing device 28 is pressed by the press device 40 and fitted to the outer surface of the turn fin tube 15. Specifically, after inserting the turn fin tube 15 into the fixing device 28, the extension parts 26 are press-formed by the press device 40. Accordingly, the outer surface of the turn fin tube 15 is closely fitted to the fixing device 28.

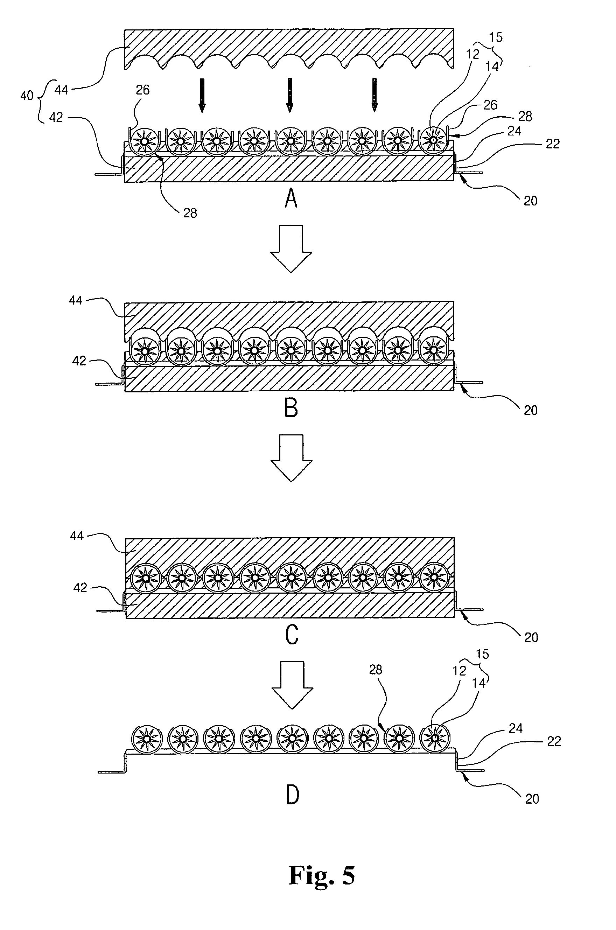

FIG. 5 is a set of cross-sectional views showing a process of pressing a horizontal fixing member installed at a turn fin condenser in accordance with an exemplary embodiment of the present invention.

As shown in FIG. 5, a horizontal fixing member 20 installed at a turn fin condenser 10 in accordance with an exemplary embodiment of the present invention may be installed at a turn fin tube 15 by steps of A→B→C→D.

Steps A to D will now be described in detail.

First, the horizontal fixing member 20 is seated on a base part 42 of a press device 40, and the turn fin tubes 15 are inserted into fixing devices 28 installed at the horizontal fixing member 20 (Step A).

Next, a press part 44 of the press device 40 is moved downward (Step B), and the press part 44 presses extension parts 26 of the fixing devices 28 (Step C). As a result, the extension parts 26 are closely fitted to the outer surface of the turn fin tube 15. In this process, the press part 44 has a lower surface having a semi-cylindrical surface having the same diameter as the outer surface of the turn fin tube 15.

After Steps A to C, the press part 44 is moved upward and the turn fin tube 15 to which the horizontal fixing member 20 is fixed is discharged from the base part 42 (Step D).

Through the above processes, the horizontal fixing member 20 is installed at the primarily bent serpentine turn fin tube 15.

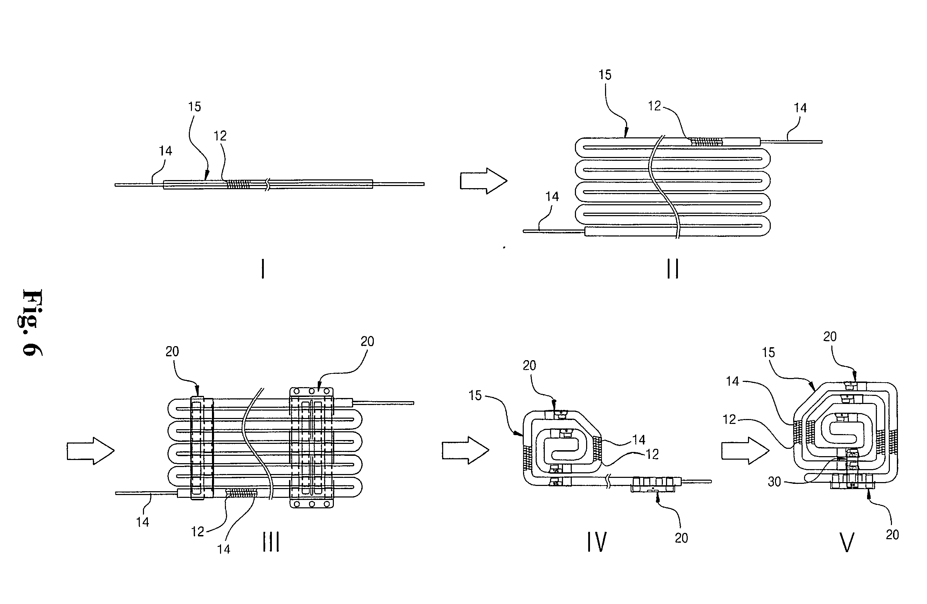

FIG. 6 is a set of views showing a process of manufacturing a turn fin condenser in accordance with an exemplary embodiment of the present invention.

As shown in FIG 6, I shows a winding step of spirally winding a turn fin 12 around a tube 14, II shows a primary bending step of bending the wound turn fin tube 15 to form a serpentine shape.

In this process, the serpentine shape means that the tube 14 is alternately bent by 180° at predetermined intervals to form a multi-stage structure as shown in II of FIG. 6 such that fluid flowing through the serpentine-shaped tube 14 alternately flows in opposite directions.

In addition, III shows a step of installing the horizontal fixing member 20 at the serpentine-shaped turn fin tube 15. Further, IV shows a step of secondarily bending the primarily bent turn fin tube 15 in the longitudinal direction of the serpentine shape, and V shows a step of installing a vertical fixing member 30 for aligning a position of the horizontal fixing member 20 installed at the secondarily bent turn fin tube 15.

By the above manufacturing processes, it is possible to effectively adjust and align gaps between the bent turn fin tubes 15 and provide a turn fin condenser 10 having improved heat exchange efficiency per unit volume.

As can be seen from the foregoing, a turn fin condenser in accordance with an exemplary embodiment of the present invention has the following advantages.

First, when a turn fin tube on which a wrinkled strip is spirally wound is primarily bent to form a serpentine shape, it is possible to effectively adjust a gap between the tube windings.

Second, it is possible to provide a condenser employing a turn fin tube having improved heat exchange efficiency, and miniaturize an actual product by secondarily bending a serpentine-shaped turn fin tube.

Third, a horizontal fixing member is pressed by a press device, and a vertical fixing member aligns and fixes a position the horizontal fixing member, thereby simplifying assembly and reducing assembly time in comparison with the conventional bolt fastening structure.

While exemplary embodiments of the present invention have been shown and described, it will be appreciated by those skilled in the art that various changes may be made to these exemplary embodiments without departing from the spirit and scope of the invention as defined by the appended claims and their equivalents.

## Claims

1. A turn fin condenser comprising a turn fin tube (15) formed of a wrinkled strip having a predetermined width and spirally wound around a tube (14) through which fluid flows, **characterized in that** the turn fin tube is primarily bent into a serpentine shape to be horizontally arranged and fixed by a horizontal fixing member (20), and secondarily bent in the longitudinal direction of the primarily bent serpentine shape.

2. The turn fin condenser according to claim 1, wherein the horizontal fixing member comprises a fixing device having a semi-cylindrical part of the same inner diameter as an outer surface of the turn fin tube and extension parts extending in parallel from both sides of the semi-cylindrical part, and the fixing device is pressed by a press device to be closely fitted to the outer surface of the turn fin tube.

3. The turn fin condenser according to claim 2, wherein at least two horizontal fixing members are installed in the longitudinal direction of the serpentine shape.

4. The turn fin condenser according to claim 1, further comprising a vertical fixing member for arranging and fixing a vertical position of the horizontal fixing member vertically disposed in the secondarily bent state.

5. The turn fin condenser according to claim 4, wherein the horizontal fixing member comprises a flange formed at its one side and having a fastening hole, and the vertical fixing member comprises a fastener fastened to the fastening hole.

## Patentansprüche

1. Wendelrippenkondensator, umfassend ein Wendelrippenrohr (15), das aus einem gewellten Streifen geformt ist, der eine vorgegebene Weite aufweist und spiralförmig um ein Rohr (14) gewunden ist, durch welches ein Fluid fließt, **dadurch gekennzeichnet, dass** das Wendelrippenrohr vorrangig in eine Schlangenform gebogen ist, um horizontal angeordnet und durch ein Horizontalhalteorgan (20) gehalten zu werden, und zweitrangig in Längsrichtung der vorrangig gebogenen Schlangenform gebogen ist.

2. Wendelrippenkondensator nach Patentanspruch 1, bei dem das Horizontalhalteorgan eine Haltevorrichtung umfasst, die über einen halbzylindrischen Teil mit einem Innendurchmesser desselben Betrages, wie dem der Außenfläche des Wendelrippenrohres verfügt und über abstehende Teile, die parallel von beiden Seiten des halbzylindrischen Teils abstehen, und die Haltevorrichtung durch eine Pressvorrichtung derart gepresst ist, dass sie an der Außenfläche des Wendelrippenrohres eng anliegt.

3. Wendelrippenkondensator nach Patentanspruch 2, bei dem mindestens zwei Horizontalhalteorgane in der Längsrichtung der Schlangenform angebracht sind.

4. Wendelrippenkondensator nach Patentanspruch 1, weiterhin umfassend ein Vertikalhalteorgan zum Anordnen und Halten einer vertikalen Stellung des Horizontalhalteorgans, das vertikal in dem zweitrangig gebogenen Zustand angeordnet ist.

5. Wendelrippenkondensator nach Patentanspruch 4, bei dem das Horizontalhalteorgan einen Flansch umfasst, der an der einen seiner Seiten ausgebildet ist und über ein Befestigungsloch verfügt, und das Vertikalhalteorgan ein Befestigungselement umfasst, das an dem Halteloch befestigt ist.

## Revendications

1. Condensateur à ailette à spirale comprenant un tube à ailette à spirale (15) formé par une bande froissée ayant une largeur prédéfinie et enroulée en spirale autour d'un tube (14) qui est traversé par du fluide, **caractérisé en ce que** le tube à ailette à spirale est courbé de manière primaire en une forme en serpentin pour être disposé horizontalement et fixé par un organe de fixation horizontal (20) et est courbé de manière secondaire dans le sens longitudinal de la forme en serpentin courbée de manière primaire.

2. Condensateur à ailette à spirale selon la revendication 1 dans lequel l'organe de fixation horizontal comprend un dispositif de fixation ayant une partie semi-cylindrique du même diamètre intérieur qu'une surface extérieur du tube à ailette à spirale et des parties d'extension qui s'étendent parallèlement à partir des deux côtés de la partie semi-cylindrique et le dispositif de fixation est pressé par un dispositif de pression qui doit être serré contre la surface extérieure du tube à ailette à spirale.

3. Condensateur à ailette à spirale selon la revendication 2 dans lequel au moins deux organes de fixation horizontaux sont installés dans le sens longitudinal de la forme en serpentin.

4. Condensateur à ailette à spirale selon la revendication 1 comprenant de plus un organe de fixation vertical pour arranger et fixer une position verticale de l'organe de fixation horizontal qui est placé verticalement à l'état courbé de manière secondaire.

5. Condensateur à ailette à spirale selon la revendication 4 dans lequel l'organe de fixation horizontal comprend une bride formée à l'un de ses côtés et ayant un trou de fixation et l'organe de fixation vertical comprend une attache attachée dans le trou de fixation.
